# EUROPEAN PATENT SPECIFICATION

(11) **EP 2 358 208 B1**
(45) Date of publication and mention of the grant of the patent: **02.03.2016**
(21) Application number: 09804151.0
(22) Date of filing: 15.12.2009
(51) Int. Cl.: A23B 7/015, A23B 7/148, A23B 7/158

(54) **METHOD FOR PROLONGING THE SHELF LIFE OF AGRICULTURAL AND FOOD PRODUCTS**
VERFAHREN ZUR VERLÄNGERUNG DER HALTBARKEIT VON AGRAR- UND LEBENSMITTELPRODUKTEN
PROCÉDÉ PERMETTANT DE PROLONGER LA DURÉE DE CONSERVATION DE PRODUITS AGRICOLES ET ALIMENTAIRES

(30) Priority: 16.12.2008 US 122748 P; 02.09.2009 US 239097 P
(43) Date of publication of application: 24.08.2011
(73) Proprietor: Megair Ltd., 75707 Rishon Le-Zion (IL)
(72) Inventor: ITZHAK, David, 63427 Tel-Aviv (IL)
(74) Representative: Vossius & Partner Patentanwälte Rechtsanwälte mbB
(86) International application number: PCT/IL2009/001188
(87) International publication number: WO 2010/070639

(56) References cited:
- WO-A1-00/24431
- WO-A1-96/16555
- WO-A1-2006/097634
- WO-A2-2007/026363
- US-A- 3 339 475
- SILVIA D. STAN ET AL.: "Investigation of the Presence of OH Radicals in Electrolyzed NaCl Solution by Electron Spin Resonance Spectroscopy" JOURNAL OF AGRICULTURAL AND FOOD CHEMISTRY, [Online] vol. 53, no. 12, 2005, pages 4901-4905, XP002593150 DOI: 10.1021/jf047920b [retrieved on 2010-07-22]

## Description

The quality of agricultural products tends to deteriorate quite rapidly after harvest. Specifically, microbial contamination in the air is one of the major causes responsible for shortening the postharvest life of fruit and vegetables. Consequently, there exists a need for protecting various food products, such as fresh fruit and vegetables, from microbial damage during storage and shipping. Temperature control, i.e., refrigeration, and preservative coatings are of course well accepted methods for lengthening the postharvest life of fruit and vegetables.

In the case of grapes, it is also known to introduce sulfur dioxide into the packages to inhibit the decay of the fruit. The effect of chlorine in relation to prolonging the shelf life of grapes is described in US 4,748,904.

WO 2007/026363 describes a method for reducing the level of microorganism of indoor air, by contacting a stream of indoor air with a concentrated salt solution, which is preferably halide brine having a Redox (reduction-oxidation) potential in the range between 200 mV and 450 mV. The publication identifies certain brines that are capable of developing such Redox potentials under suitable aeration conditions, and alternatively or in addition, proposes to electrolyze the brine in an electrolytic cell, whereby the Redox potential of the brine is adjusted within the range specified above.

WO 00/24431 describes a method for applying electrochemically activated, bactericidal aqueous solution in the bactericidal treatment of a contaminated medium, the method characterised in including the step of atomising and dispersing the electrochemically activated, bactericidal aqueous solution into the atmosphere about a contaminated medium to be treated, forming a fog of airborne droplets of between 1 and 100 micrometres of suitable bactericidal concentration about the treated medium.

Co-assigned international patent application no. PCT/IL2009/00227 describes a method for reducing the biological contamination of indoor air and sanitizing the walls and surfaces in a closed space, which method comprises causing a stream of air to flow upwardly through a treatment zone, and to contact with a stream of brine solution. An apparatus suitable for carrying out said method is also disclosed in PCT/IL2009/00227.

It has now been found that an aqueous solution having high Redox potential, especially electrolyzed brine solution having a Redox potential greater than 450 mV, and especially between 500 and 1000 mV, can be used in a postharvest treatment of fruit and vegetables in storage rooms, and hence, for lengthening the postharvest life of fruit and vegetables. The term "storage room" is used herein to indicate any storage facility or container in which the fruit or vegetables are stored, including during shipping, wherein the temperature in said storage room is preferably less than 45°C, more preferably less than 30°C and even more preferably in the range between -1°C and 14 °C (-1°C and 12 °C) during at least a portion of the storage period, and preferably throughout the entire storage period. When the air in a cold storage room is treated with the aforementioned brine, then the microbial load in the storage room is reduced significantly. Furthermore, it has been found that the development of fungal colonies in solid growth medium (agar dishes) placed in the treated storage room can be essentially prevented following said air treatment. Notably, agar dishes inoculated with fungi (specifically conidia of *B. cinerea,* a fungus causing grapes decay under commercial conditions) and exposed in the cold storage room to air treated by the electrolyzed brine, failed to develop a visible colony even after an incubation period of several days at 25°C. It has been found that treating the air within the storage room with the electrolyzed brine accomplishes the destruction of fungal spores both in the air and solid growth media placed in the storage room.

Additionally, the effect of air treated with the electrolyzed brine in a storage room has been tested directly in relation to the preservation of agricultural products. As shown in detail in the examples below, treating the air in the storage room by means of the electrolyzed brine has proven effective in inhibiting the development of decay in various agricultural products, including strawberries, tomatoes, grapes, potatoes, sweet potatoes and onions. It is assumed that various oxidant species, such as halogens, oxycompounds of halogens, oxygen and radicals thereof produced in the electrolyzed brine solution are transferred to the air which passes through said brine, which oxidant species are then distributed by the air in the storage room and released onto the walls and other surfaces in the treated space, accomplishing the protection of the fruit and vegetables stored therein.

Accordingly, the present invention relates to a method for prolonging the shelf life of agricultural and food products (e.g., for inhibiting or reducing the growth of fungi on fruit and vegetables), comprising forcing a stream of air to flow through a treatment zone in which an aqueous solution having a Redox potential above 200 mV is provided, whereby said air contacts said solution, and delivering the air leaving the treatment zone into a storage room in which said agricultural or food products are placed. Preferably, the aqueous solution is an electrolyzed brine solution having Redox potential above 450 mV, and more preferably in the range between 500 and 1000 mV. More specifically, the method comprises forcing a stream of air to flow upwardly through the treatment zone, such that it comes into contact with a stream of an aqueous salt solution having Redox potential of not less than 450 mV on a substantially horizontally aligned perforated surface, thereby forming a layer of bubbling liquid located above said surface, and delivering the treated air which exits said treatment zone into the storage room. The term "treated air" indicates the air which passed through the active layer provided by the bubbling liquid.

A non-limiting list of agricultural products, whose postharvest life can be lengthen according to the invention, includes fruit and vegetables such as grapes, strawberries, tomatoes, potatoes, sweet potatoes, onions, blueberries, peaches, mangoes, melons, eggplants, apples, apricots, cherries, avocadoes, peppers and citrus fruit (including fresh cut fruit and vegetables). By the term "food product" is also meant fresh meat, chicken and fish.

It should be noted that the fruit treated by the method of the invention, and especially grapes, maintain their freshness in the refrigerator for several weeks after the treatment. Thus, the present invention offers an alternative to the sulfur-dioxide based treatment used for preserving grapes. Sulfur dioxide-free, extended period storable grapes which are protected against decay due to B. cinerea, obtainable by the method of the invention form another aspect of the invention.

It has also been found that potatoes, sweet potatoes, onions and mangos exposed to air treated by the method of the invention exhibit improved storage life. More specifically, the overall appearance of said vegetables has been improved following exposure of about 24 to 96 hours to the treated air, with a reduction in fungal infection of the skin of the vegetables being observed.

In practice, the air in the storage room is forced to flow, preferably continuously, through the treatment zone, where it contacts the electrolyzed brine, as described in more detail below. The stored fruit and vegetables are exposed to the treated air for a period of several hours, e.g., between 1 and 96 hours, for example between 1 and 36 hours. Longer exposure periods may also be applied. It should be understood, however, that the continuous treatment may be occasionally interrupted. In order to generate the desired environment in the storage room allowing the effective preservation of the fruit and vegetables, it is not necessary to run the method of the invention under conditions where a brine solution having a redox potential above 500 mV is passed through the treatment zone over long time periods (such a brine solution is sometimes named herein as "strong oxidant brine"). In practice, under a routine mode of operation, a brine with a redox potential lower than 500 mV (e.g., between 200-450 mV or even less) may be utilized when running the method of the invention. From time to time, however, the air in the closed space is contacted, under the conditions set forth above, with a brine solution having a redox potential above 500 mV. The treatment may be repeated periodically, for example, once or twice weekly, each time for several hours or days as indicated above. The exact treatment regimen, namely, the length of each treatment interval and its frequency depend on the size of the storage room and the conditions therein (temperature, humidity, the level of contamination in the room), the agricultural product stored therein and its initial level of contamination, the variety of the fruit or vegetable, the length of time between harvesting of the fruit or vegetable and the application of the method of this invention, the kind of fungi the inhibition of which is targeted and the characteristics of the treatment zone provided in the storage room for effecting the contact between the air and the electrolyzed brine solution, namely, the working parameters of the apparatus employed for carrying out the method of the invention.

Regarding the last point, a suitable treatment zone for accomplishing the contact between the air in the storage room and an electrolyzed brine solution may be provided by any column suitable for contacting gas and liquid. More specifically, a column for contacting upwardly flowing gas with downwardly flowing liquid (namely, the electrolyzed brine) is placed in the storage room, which column is provided with inlet (s) and outlet (s) for the gas, said openings being arranged in the lower and upper sections, respectively. A perforated plate is placed in said column, onto which the electrolyzed brine solution is supplied. The air passes through the holes of the perforated plate upwardly, and is contacted with the electrolyzed brine on said plate, where an active layer of liquid and bubbles is formed. The treated air emerges from said layer and flows to the upper part of the column, exiting the column through the gas outlet. A particularly suitable column for contacting air and brine solution, which column further allows the electrolysis of said brine solution, the measurement and control of its redox potential and the supply of said solution through delivery tubes onto the perforated plate in said column, is described in detail below with reference to the drawings. An important feature of the method is the active layer formed in the treatment zone, in which layer the air and the brine solution mix. The term "active layer" indicates the volume of a bubbling liquid (i.e., a liquid through which a gas - air in the present case - is passed), which is formed on a substantially horizontally aligned perforated surface placed within the column. Perforated surfaces for promoting the formation of a bubbling liquid are generally in the form of meshes or plates with a varying percent open area. The percent of the open area, in the form of perforation, should match the liquid and gas loadings into the treatment zone. The height of the active layer is preferably between 1 and 7 cm (the height depends on the geometrical parameters of the column and the open area of the perforated surface). The air preferably enters the treatment zone at a pressure of not less than 350 Pa, preferably not less than 450 Pa above the ambient atmospheric pressure (although suction mode may also be applied for forcing the air to flow into the treatment zone).

The terms "brine" or "brine solution", as used herein interchangeably, refer to dilute, concentrated, nearly saturated or saturated salt solutions, namely, solutions wherein the concentration of the salt dissolved therein is not less than 0.1% (w/w), preferably not less than 1.0%, more preferably not less 10% (w/w), and even more preferably not less than 20% (w/w), and up to saturation at the relevant temperature. Compositionally, the concentrated salt solution operative in the present invention is an aqueous solution containing one or more water soluble salts represented by the formulas MX, M₂X and MX₂, wherein X is selected from the group consisting of chloride, bromide, iodide, sulfate and nitrate anions, and M indicates a metal cation, which is most preferably selected from the group consisting of lithium, sodium, potassium, calcium, magnesium and zinc, and mixtures thereof. Preferred brine solutions include concentrated solutions of sodium chloride (with a concentration of not less than 10 wt%, and preferably not less than 20 wt%, and more preferably about 30% wt), and also its mixture with calcium chloride. Another Preferred concentrated salt solution to be used according to the invention comprises a mixture of at least one bromide or iodide salt, in combination with at least one chloride salt of one or more of the following metals: Na⁺, K⁺, Mg²⁺ and Ca²⁺. An especially preferred solution contains a mixture of bromide and chloride salts dissolved therein in a total concentration of 30 to 40% by weight, with the cationic species being Mag²⁺, Ca²⁺, Na⁺ and K⁺. More specifically, the concentrations of the aforementioned ions are as follows: Mg²⁺: 30-50 g/liter; Ca²⁺: 10-20 g/liter; Na⁺: 30-50 g/liter; K⁺: 5-10 g/liter; Cl⁻: 150-240 g/liter; Br⁻: 3-10 g/liter. An example of such a solution is provided by the Dead Sea brine, which has the following typical (average) mineral composition: Mg²⁺: about 40.6 g/liter; Ca²⁺: about 16.8 g/liter; Na⁺: about 39.1 g/liter; K⁺: about 7.26 g/liter; Cl⁻: about 212.4 g/liter; Br⁻: about 5.12 g/liter, with the total concentration of salts dissolved therein being 33% by weight. Another preferred concentrated salt solution comprises a mixture of bromide and chloride salts dissolved in water in a total concentration of 30 to 40% by weight, with the cationic species being Mg²⁺, Ca²⁺, Na⁺ and K⁺, wherein the concentration of calcium chloride in said solution is effective in reducing the rate of evaporation of water therefrom, and is preferably in the range between 20 and 200 g/liter.

As indicated above, the brine solution operative according to the present invention has a Redox potential of not less than 450 mV, and preferably between 500 and 1000 mV. The Redox potentials reported herein are measured using Pt/Ag/AgCl electrodes, thus indicating the electrochemical potential which is developed between Pt electrode exposed to the brine and a standard silver-silver chloride electrode.

The method of the present invention involves the circulation of the brine through a treatment zone placed in the storage room, wherein a stream of air, which is forced to flow through said treatment zone, contacts the brine. More specifically, the treatment zone, in the form of a vertically positioned column which is described in more detail below, is divided by a horizontally aligned, perforated surface into lower and upper sections. The brine solution is fed to the column in the upper section, flows downwardly through the column, and is collected in the lower section of the column below the perforated surface. A stream of air is caused to flow upwardly through the column, to form an active layer on said horizontally aligned perforated surface, in which layer the brine and air mix. Hence, the active layer is formed on the substantially horizontally aligned perforated surface, as a result of an upward air flow and downward liquid (brine solution) flow.

In order to increase the redox potential of the brine solution, namely, to generate a brine solution with the Redox potential noted above, the brine is preferably electrolyzed in an electrolytic cell. The term "electrolytic cell", as used herein, refers to a set-up comprising electrodes connected to the opposite poles of a direct electrical current (DC) power supply. The electrolytic cell is placed in any suitable location in the pathway of the circulating brine. In its most simple configuration, an electrolytic cell suitable for use according to the present invention comprises two electrodes that are affixed within the reservoir used for storing the brine, or alternatively, within a conduit used to transfer the brine to the treatment zone. The electrodes are preferably placed in parallel to each other, separated by a gap of 0.3 to 2.0 cm, and more preferably of 0.5 to 1.0 cm. The electrodes are preferably in the form of plates or meshes having a length and a width of about 2 and 10 cm, respectively. The electrodes are generally composed of a metal selected from the group consisting of Ti, Nb and Ta, coated with Pt, Ru, RuO2 and Ir. Platinum, an alloy of platinum and iridium and electrodes of the type M-MO (wherein M designates a metal, and MO a metal oxide, such as Ir-TaO2) may also be used. The cell typically operates at a current density of 10³-10⁵ Ampere per square meter of anode, applying a voltage in the range between 2 and 12 V, and preferably about 3-5 V. For example, when the volume of the brine solution employed in the method of the present invention is between 10 and 20 liters and its density is about 1.3 g/cc, then using electrodes having the dimensions and other characteristics as set forth above, with the current passing through the cell being more than 1 A, results, following electrolysis for about 10-20 minutes, in the brine solution attaining a Redox potential of about 700-1000 mV. A lower current, in the range between 0.2-0.5 A, is generally effective in producing a brine solution having a Redox potential in the range of 500-700 mV following electrolysis of about 2-5 minutes. Preferred operable Redox working ranges are above 500 mV, preferably between 500 mV and 1000 mV, more specifically between 500 and 900 mV. It should be noted that the effective mixing with the stream of air and the formation of a bubbling liquid as described above also contributes to the development and maintenance of the Redox potential of the brine solution. Furthermore, certain brines (e.g., iodide-containing brines), can develop Redox potential greater than 500 mv spontaneously, after having being aerated with the stream of air to be treated under the conditions set forth above, and, furthermore, such brines may maintain their Redox potential over time, though from time to time it may be useful to activate the electrolytic cell for a short duration and to pass said brines through the cell, in order to stabilize their Redox potential within the desired range.

In order to decrease the Redox potential of the brine solution, the brine is chemically treated with one or more oxidizer-scavenging compounds. The term 'oxidizer-scavenging compounds' is used herein to indicate organic and inorganic compounds which are useful in removing oxidizers (e.g., oxygen, halogens, oxyhalogens and radicals thereof) from an aqueous solution. Oxidizer-scavenging compounds which act as reducing agents, and specifically, sulfur-based reducing agents, such as water soluble salts of sulfite, bisulfite, thiosulfate, metabisulfite, hydrosulfite or mixtures thereof, as well as other reducing agents such as ascorbic acid, are all within the scope of the present invention.

It should be noted that the specific structural and operating parameters set forth above are considered suitable for preserving agricultural products stored in a storage room having a volume in the order of approximately 10-50 cubic meters. For large scale storage facilities, however, various adjustments may be made by the practitioner in order to effectively run the method of the invention. For example, a larger volume of the circulating brine solution may be used; the rate of flow of the air passing through the treatment zone may be increased; the electrolytic cell may operate utilizing electrodes providing high surface area with enhanced electrical currents. It is of course also possible to place in the large scale storage room a plurality of apparatuses such as the one illustrated in detail below.

The Redox potential of the brine is a readily measurable property, which may therefore serve for monitoring the operation of the method provided by the invention. The measurement of the Redox potential is conveniently achieved by contacting the circulating brine, or a sample of the brine, with a suitable set-up as described above (Pt/Ag/AgCl electrodes). Depending on the results of the Redox potential measured by the set-up set forth above, or an alternative set-up, the Redox potential may be adjusted electrolytically or chemically, as described above, or mechanically, by changing flow and mixing characteristics. Thus, the method provided by the present invention may further comprise periodically or continuously measuring the Redox potential of the brine solution, and electrolytically, mechanically or chemically adjusting the Redox potential of the brine based on the measured value of the Redox potential.

The set-up which serves for measuring the Redox potential of the brine is positioned at any appropriate location in the pathway of the circulating brine, for example, inside the reservoir holding the brine, or in a conduit used to deliver the brine into the treatment zone. The measured Redox potential may then be used to provide one or more automatic feedback signals to the electrolytic cell in order to adjust its operation, or to a container which holds an aqueous solution of a reducing agent, to allow the feeding of said solution into the brine and thereby to lessen its Redox potential. Alternatively or in addition, the electrolysis of the brine, for obtaining an electrolyzed brine having high Redox potential, and the feeding of a reducing agent into said strong electrolyzed brine in order to rapidly lessen its Redox potential, can be adjusted by a human operator based on the observed Redox potential. To this end, the measurement of the Redox potential may be used to generate an alarm signal, to trigger the interference of the human operator once the measurement of the Redox potential indicates a value outside a specified working range.

Alternatively or in addition, the invention may further include periodically or continuously measuring the level of chlorine-containing compounds (oxidizers such as chlorine, chlorine dioxide and other oxy-compounds of chlorine) in the storage room, and electrolytically, mechanically or chemically adjusting said level based on the measured value. Operable levels of chlorine-containing compounds (hereinafter simply "chlorine level") in the treated closed space may vary between 0.1 and 10 ppm, more preferably within 0.1 and 3ppm. For example, arriving at a chlorine level of about 1 ppm and maintaining the said level for a period of time of about 20-24 hours by the method of the invention has been found to allow an effective sanitization of 25 m³ storage room. Chlorine level of several ppm, namely, up to 10 ppm, may also be practiced under appropriate safety measures. The reduction of the chlorine level in the closed space may be carried out by interrupting the contact of the air with the electrolyzed brine solution, and causing the air to flow through a column and contact with a solution of oxidizer-scavenging compounds, which solution was described above. For this purpose, the air may be either directed to a second, similar column, in which a solution of oxidizer-scavenging compounds is operated, or said solution may be employed in the treatment zone of the invention and circulate therein, in place of the electrolyzed brine solution.

The method provided by the present invention requires contacting a stream of air and the brine solution. In general, as already noted above, any type of apparatus that allows contact between air and a brine solution may be adapted to run the method of the present invention. To this end, the apparatus is further provided with an electrolytic cell as described above, and preferably also with at least a pair of electrodes, namely, a measuring electrode and a reference electrode, positioned within the apparatus to permit the measurement of the Redox potential of the brine. A particularly useful apparatus, in which the air passes through the liquid, creating an active layer as hereinbefore defined, will now be described in more detail.

The apparatus comprises a gas-liquid contact compartment (column) having a perforated plate affixed therein, such that said plate divides said compartment into a first (e.g., lower) space, which is provided with at least one air inlet opening, and a second (upper) space, which is provided with at least one air outlet. A gas blowing means communicates with said air inlet opening, in order to cause a stream of air to flow into said first space of said gas-liquid contact compartment and to pass through the perforated plate into the second space of said compartment. A reservoir (suitable for holding a brine solution) is in fluid communication with the gas-liquid contact compartment. The apparatus further comprises an electrolytic cell, namely, a set-up comprising electrodes connected to the opposite poles of a direct electrical current (DC) power supply. The electrolytic cell is placed in any suitable location within the apparatus. In its most simple configuration, an electrolytic cell suitable for use according to the invention comprises two electrodes that are affixed within the reservoir used for storing the brine, or alternatively, within a conduit used to transfer the brine to the compartment. The apparatus further includes at least a pair of electrodes (a measuring electrode and a reference electrode) connected to a voltmeter, which electrodes are suitably arranged for measuring the Redox potential of the brine. The apparatus preferably comprises a chlorine sensor, for determining the chlorine level in the storage room:

More specifically, the apparatus of the invention comprises an elongated, vertically positioned, preferably cylindrical, column. Within the interior space of the column a perforated plate is placed, which plate is perpendicularly arranged relative to the longitudinal axis of said column, and is being affixed to the inner walls of the column, thus dividing the column into lower and upper spaces. An opening is provided in the lateral surface of the lower space of the cylindrical column, which opening serves for air inlet. The upper space of the column comprises an opening which serves as air outlet. A reservoir for holding a brine solution is preferably provided by the lowermost section of the column (where the level of the brine solution is kept below the air inlet opening).

Air blowing unit is preferably connected to the lateral air inlet opening provided in the first section of the column (preferably, but not necessarily, the connection is in a direction tangential to the wall of the column). Suitable air blowing units preferably operate at pressures of not less than 350 Pa (corresponding to about 35 mm H2O), preferably of not less than 470 Pa (corresponding to about 48 mm H2O). Air blowing units which can attain the aforementioned pressure values are industrial centrifugal extractor fans, which are commercially available (pressure values reported herein are above the ambient atmospheric pressure).

In operation, the brine solution is continuously driven from the lowermost section of the column to its upper space, above the perforated plate, in order to maintain a layer of said brine solution over the upper side of the perforated plate while air streams introduced into the column through the air inlet opening are forced to pass through the perforated plate and contact the brine solution maintained thereon. The air streams which pass through the pores of the perforated plate create a relatively thick layer of bubbling liquid on top of the perforated plate.

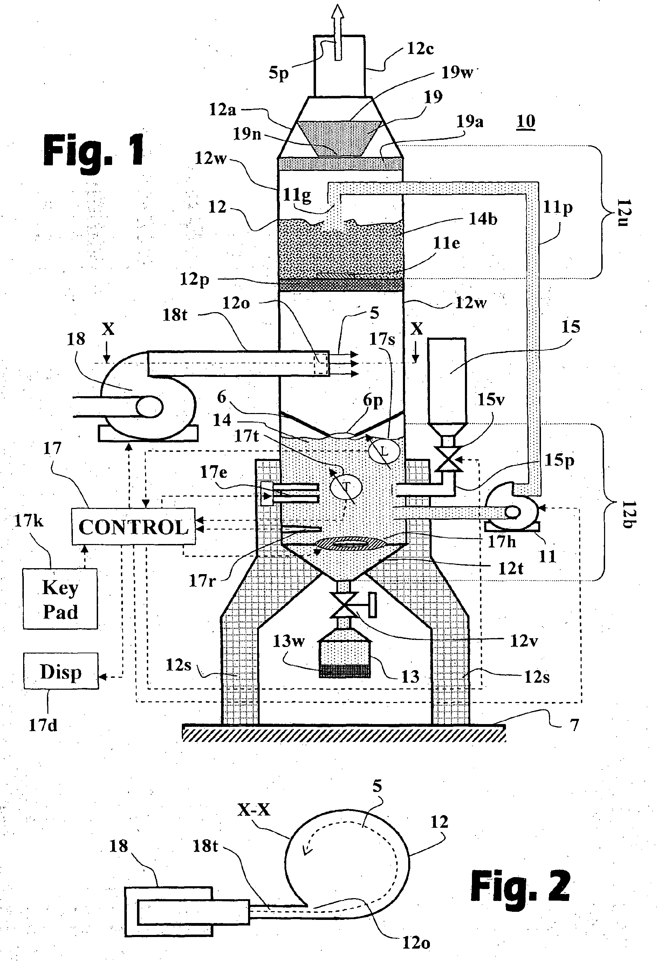

Referring to the drawings, Fig. 1 schematically illustrates a preferred embodiment of the apparatus **10** of the invention comprising a column **12** vertically leveled relative to ground surface 7 by means of lateral supports **12s,** a perforated plate **12p** mounted inside the column **12** in perpendicular to its walls **12w,** a blower **18** communicating with the air inlet opening **12o** formed in the wall **12w** of column **12** below perforated plate **12p,** and a pipe system **11p** adapted for piping fluids from the bottom portion **12b** of column **12** to its upper portion **12u** by means of pump **11** (e.g., magnetic rotary pump).

Column **12,** which preferably has a cylindrical shape, is made of chemically resistant material such as, but not limited to, stainless alloys (such as austenitic, ferritic and martensitic stainless steels, titanium alloys, nickel-based super alloys and cobalt alloys) or suitable plastics (such as PVC, CPVC, polyethylene, polypropylene, polybutylene, PVDF, Teflon and polyester). The inner diameter of the column is generally in the range of 30 to 60 cm, preferably about 30 cm, its wall thickness may generally be in the range of 2 to 6 mm, preferably about 3 mm, and its length may range between 0.8 to 2 m, preferably about 1.2-1.5 m. The area of air inlet opening **12o** is generally in the range of 100 to 400 cm². In a preferred embodiment of the invention, the opposite sides of the air inlet opening **12o** are parallel to one another (e.g. the projection of the opening is rectangular), with a length in the range between 20 and 50 cm, and width in the range between 4 and 8 cm.

Perforated plate **12p** is preferably made of a chemically resistant metallic or plastic material, such as those listed above. The thickness of the plate is preferably in the range of 1 to 5 mm. Perforated plate **12p** is adapted to tightly fit in column **12** and occupy a cross-sectional area thereof, and is located above air inlet opening **12o.** The pores in perforated plate **12p** preferably occupy 30%-90% of its surface area.

Blower **18** is preferably an electric centrifugal blower capable of providing air streams in the range of 100 to 3000 m³/hr, preferably about 300-800 m³/hr.

The bottom section **12b** of column **12** serves for holding the brine solution **14.** A treated air outlet **12c** is provided in the upper space **12u** of column **12.** In operation, the brine solution **14** is continuously piped by fluid pump **11** and is delivered to the upper space **12u** of column **12,** while ambient air streams 5 introduced by blower **18** via air inlet opening **12o** into column **12** are forced to pass perforated plate **12p** and contact the brine, whereby an active layer of a bubbling liquid **14b,** is formed, following which a stream of purified air **5p** is passed out of column **12** via air outlet **12c.**

Partition member **6** is preferably mounted inside column **12** below air inlet opening **12o,** wherein said partition member **6** has a funnel-like shape, downwardly tapering towards an opening **6p.** Partition member **6** thus allows brine solution falling from the upper space **12u** to be conveniently directed to, and collected in, the lower space **12b** of the column.

The outlet of blower **18** preferably communicates with air opening **12o** of column **12** via a passage **18t** (typically having a rectangular cross-section) adapted to fit over said opening such that the air streams passing therethrough are distributed through the area of air opening **12o.** The diameter of purified air outlet **12c** may generally be in the range of 10 to 30 cm, its cross-sectional area preferably being essentially equal to the area of air opening **12o,** such that the rate of flow of treated air stream **5p** leaving column **12** via air outlet **12c** is essentially equal to the rate of flow of ambient air stream introduced into column **12** via air inlet opening **12o** (e.g., in the range of 100 to 2000 m³/hr). Alternatively, the diameter of purified air outlet **12c** may be the same as the diameter of column **12.**

Treated air outlet **12c** is preferably connected to a tapering section **12a** provided at the upper end of column **12.** In order to minimize the escape of liquid drops through the air outlet opening, the drops may be separated from the treated air by passing the air through a porous substrate or by providing a cyclone-type arrangement as well known in the art.

For example, one or more drops separating elements may be installed in, or adjacent to, tapering section **12a.** In one preferred embodiment a frustoconical member **19** made of a porous material (e.g., a sponge), is mounted in tapering section **12a** by means of supporting means (not shown), such that its small base **19n** is facing perforated plate **12p** and its large base **19w** is facing purified air outlet **12c** and occupies a cross-sectional area of tapering section **12a.** In this way, the stream of treated air passing via tapering section **12a** is forced to pass through conical member **19,** thereby separating drops of the brine solution contained therein. Alternatively or additionally, a cross sectional section of column **12** may be also occupied by a piece of porous material **19a,** preferably adjacent to tapering section **12a** for further separating brine drops from the treated air stream passing therethrough.

The drop separator may be provided as a separate unit, to be connected with the air outlet opening **12c.** One possible arrangement is a cyclone separator, which was mentioned above. Another possible arrangement for a drop separator comprises a conduit connected to the air outlet opening **12c,** which conduit is downwardly directed, conducting the drops-containing treated air into a suitable tank, where the drops can be collected. The brine thus recovered may be recycled, namely, delivered to the brine reservoir.

The apparatus **10** further comprises an electrolytic cell **17e,** RedOx electrodes **17r** and preferably also level determining means **17s,** temperature sensing means **17t,** and a heating element **17h,** all mounted in the bottom section **12b** of the column **12,** immersed in brine solution **14,** and electrically connected to a control unit **17.** Control unit **17** is adapted for monitoring and managing the operation of apparatus **10** responsive to indicating signals received from RedOx electrodes **17r,** level determining means **17s,** and temperature sensing means **17t.** Electrolytic cell **17e** is employed for electrolyzing the brine solution passing between its electrodes during operation, preferably, responsive to RedOx readings obtained from RedOx electrodes **17r.** Key pad **17k** and display unit **17d** (e.g., dot matrix or LCD) linked to control unit **17** may be respectively used by control unit **17** for receiving inputs from an operator, and for providing the operator output indications regarding the operation of system **10.** Of course, apparatus **10** may comprise additional means connected to control unit **17** for generating output indications (e.g., leds, speakers). Control unit **17** may be implemented by a specially designed control logic circuitry, preferably by a programmable microcontroller. At least one analog to digital converter may be needed for control unit **17** for converting the signals received from RedOx electrode.

In its most simple configuration, an electrolytic cell **17e** suitable for use according to the present invention comprises two electrodes that are affixed within the reservoir used for storing the brine. The electrodes are preferably placed in parallel to each other, separated by a gap of 0.3 to 2.0 cm, and more preferably of 0.5 to 1.0 cm. The electrodes are preferably in the form of plates or meshes having a length and a width of about 4 and 10 cm, respectively. The area of the electrodes may preferably vary in the range between 20 to 50 cm². The electrodes are electrically connected to the opposite poles of a direct electrical current (DC) power supply, which may be activated according to control signals received from control unit **17.** The cell typically operates at a current density of 10³-10⁵ Ampere per square meter of anode, applying a voltage in the range between 2 and 12 V, and preferably about 3-5 V. The control unit and the electrodes power supply are preferably adapted to allow control unit to periodically alter the polarity of the electrodes in order to remove electrolytic deposits therefrom.

As mentioned above, a suitable set-up for measuring the Redox potential of the brine solution comprises a measuring electrode made of an inert metal or alloy (a platinum electrode) and a reference electrode (such as Ag/AgCl or calomel). Suitable electrodes are commercially available. The apparatus may further comprise a chlorine sensor (for example, CL2-B1 sensor).

As seen in Fig. 2, showing a cross-sectional view of system **10** taken along line X-X, blower **18** is attached to the air inlet opening **12o** of column **12** such that the pressurized ambient air streams **5** introduced thereinto are directed more or less tangentially relative to the wall of column **12.**

The bottom end section **12t** of column **12** preferably tapers downwardly for draining precipitants formed in brine solution **14.** A detachable waist disposal vessel **13** may be attached to bottom end section **12t** by means of a short pipe and valve **12v** employed for blocking the passage therethrough whenever there is a need to detach waist disposal vessel **13** for removing waist precipitants **13w** obtained thereinside. The pipe leading into waist disposal vessel **13** may comprise an optical sensor (e.g., photodiode - not shown) electrically connected to the control unit for providing indications regarding the turbidity of the brine in waist disposal vessel **13,** thereby allowing the control unit to produce indications whenever the brine in waist disposal vessel **13** should be replaced.

Pipe **11p** communicating with the bottom section **12b** of column **12,** is preferably introduced into the upper space **12u** of column **12,** above perforated plate **12p,** and its opening is preferably directed downwardly i.e., facing the upper face of perforated plate **12p.** Perforated plate may include a relatively small plate **11e** (e.g., a metallic disk of about 10 cm in diameter, made of suitable material, e.g., stainless steel) attached to its upper face below the opening of pipe **11g** such that the brine solution streamed via pipe **11g** encounters plate **11e,** in order to prevent downward passage of the streamed brine solution through the pores of perforated plate **12p.** It should be noted that the brine solution may be sprayed in the upper portion **12u** of column **12** by means of sprinkles (not shown).

According to another preferred embodiment (not shown) of the invention blower **18** is attached to the treated air outlet **12c** and in this case it is adapted to apply suction for forcing a stream of ambient air into apparatus **10** through inlet opening **12o,** and/or other suitable opening(s) (not shown) provided in apparatus **10.**

Signals received by control unit **17** from level determining means **17s** provide indications regarding the level of brine solution, and whenever it is determined that the brine level is not within an acceptable range, control unit **17** issues corresponding indications via display unit **17d** (and/or vocal or visual indications, if such means are available). Alternatively or additionally, control unit **17** may halt the operation of system **10** whenever it is determined that the brine level is not within an acceptable range. Temperature sensing means **17t** and heating element **17h** are used by control unit **17** for monitoring and heating the brine solution **14.**

Various aspects of operation of apparatus **10** may be managed by control unit **17** according to readings received from RedOx electrodes **17r,** in particular, the monitoring and managing of the activity of brine solution **14** by means of electrolytic cell **17e,** as discussed hereinabove.

Apparatus **10** may further optionally comprise a container **15,** for holding a solution of oxidizer-scavenging compounds, wherein said container communicates with the bottom portion **12b** of column **12** through a pipe **15p.** Valve **15v,** which is provided on pipe **15p,** may be used for controlling the feeding of the solution of the oxidizer-scavenging compounds into the brine, in order to reduce the Redox potential of the brine, if desired. Preferably, valve **15v** is a controllable valve linked to control unit **17.** In this way control unit **17** may be adapted to provide valve **15v** control signals for altering its state and thereby controlling the passage of the solution of the oxidizer-scavenging compounds through pipe **15p** into the bottom portion **12b** of column **12,** in order to decrease the Redox potential of the brine. Oxidizer-scavenging compounds which act as reducing agents, and specifically, sulfur-based reducing agents, such as water soluble salts of sulfite, bisulfite, thiosulfate, metabisulfite, hydrosulfite or mixtures thereof, as well as other reducing agents such as ascorbic acid are utilizable. The reducing agent may be kept in container **15** in a a solid or in a liquid form (e.g., as an aqueous solution). For example, the aforementioned sulfur-based reducing agents are readily available in the form of aqueous solutions of their sodium salts, preferably with concentration varying in the range between 1 and 30% (w/w), more preferably about 5-10 % (w/w). For example, when the volume of the brine solution employed in the method of the present invention is between 10 and 20 liters, then a solution of sodium bisulfite, or sodium thiosulfate, having a concentration of about 5% (w/v) may be used in order to decrease the Redox potential of the brine.

Blower **18** is preferably a type of controllable centrifugal blower (e.g., having PWA or voltage control) capable of receiving control signals from control unit and adjusting its operation accordingly. Advantageously, control unit **17** may be adapted for producing control signals for altering the rates of ambient air flow produced by the blower **18,** responsive to readings received from the RedOx electrode **17r.** It has been observed that some brine solutions respond to enhanced aeration conditions by a rapid increase of their redox potential. In this way, the Redox potential of the brine solution may be controlled by control unit **17,** for example, by increasing the velocity of the ambient air stream.

In the following examples, the postharvest treatment according to the present invention was carried out in a cold storage room (below ambient temperature, e.g., between -1°C and 14 °C).

### Examples

### Example 1

### Reducing the load of microbial contamination in the air of a storage room and preventing the development of fungus colonies on artificial media

The apparatus shown in Figure 1 was placed in a 25 m³ storage room (operating at a temperature of 11.5°C and relative humidity of 93.3%). The control storage room had a similar volume and operated at a temperature of 8.9°C and relative humidity of 94.4%. The apparatus was operated continuously for 96 hours, using about 15 liters of aqueous solution of sodium chloride having concentration of about 30% by weight. The electrolytic cell operated under the following parameters: current- 4 Ampere, voltage - 5 volt. The Redox potential of the brine was adjusted to about 850 mV during the treatment period. The air was introduced into the apparatus by the blower at a rate of 300 m³/hour.

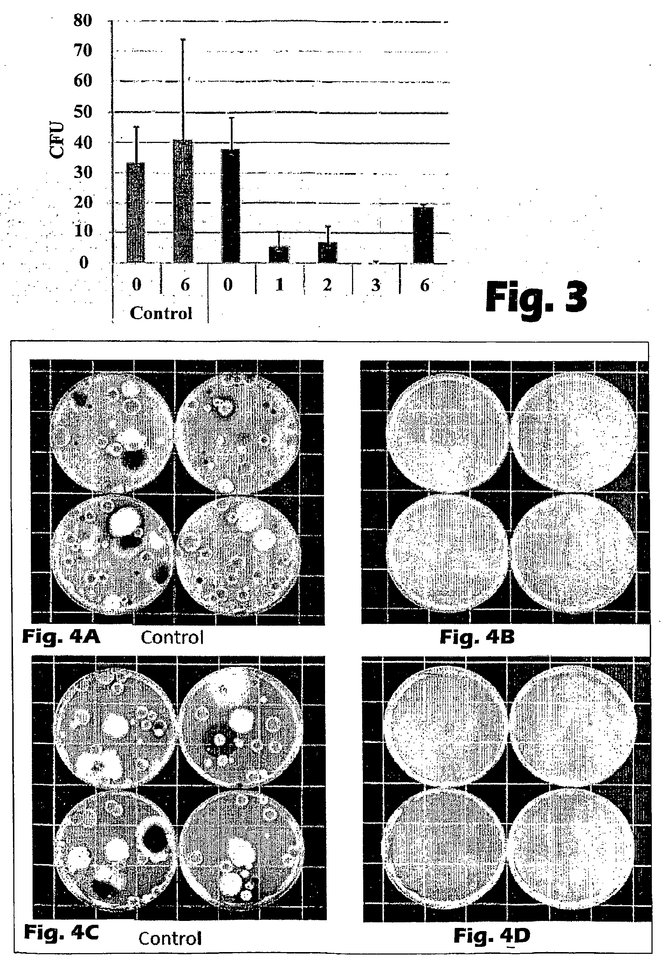

The air was sampled to determine the effect of the treatment on the presence of molds in the cold storage rooms. Sampling was performed with Biotest RCS Air Sampler set for 200 liters and equipped with strips of media for detection of molds and yeasts (Hy lab, Israel). Sampling was performed via a custom adaptor mounted through the wall of both cold storage rooms. Thus, the air was sampled without entering the cold storage rooms. The Sampling was performed before initiating the operation of the apparatus and after 24, 48, 72, and 144 h, in triplicates (the last sampling was carried out 48 hours after turning off the apparatus). The results of the measurements are presented in Figure 3.

Figure 3 is a bar graph in which the abscissa indicates the time (in days) at which the air in the storage and control rooms was sampled, and the ordinate indicates the amounts of molds in the air. The two left bars correspond to the measurements carried out in the control room, indicating high level of microbial load prior to the commencement of the experiment (day 0), and also six days after the start of the experiment. As to the measurements reported for the storage room treated according to the invention, it is noted that a significant reduction in the level of air contamination is achieved already 24 hours after the start of the experiments (day 1). As indicated above, the apparatus was operated for 4 days; after 72 hours (day 3), the level of contamination reduced to about zero. Two days following the interruption of the operation of the apparatus, the level of air contamination increased (day 6), but was still lesser than the initial level measured on day 0.

In addition to the air sampling described above, petri dishes that contained Potato Dextrose Agar (PDA) were exposed in both cold storage rooms for 24 or 48 h. Half of the plates were also inoculated with a drop of 10 µl that contained 10⁴ conidia of *B. cinerea.* After exposure, the petri dishes were closed and incubated for 5 days at 25°C. Agar dish exposure consisted of five replicates.

Figure 4 provides photographs of the Petri dishes placed in the control room and the storage room treated according to the invention (the left and right columns, respectively). The development of visible colonies (of the fungus B. cinerea and apparently of other fungi) is clearly illustrated in all agar dishes that were placed in the control room (Figure 4a relates to the non-inoculated PDA plates, whereas Figure 4c relates to the inoculated PDA plates).

In contrast, no bacterial colonies were observed in the agar dishes placed in the storage room that was treated according to the invention. (Figure 4b relates to the non-inoculated PDA plates, whereas Figure 4d relates to the inoculated PDA plates). It should be pointed out that under normal circumstances, exposure of agar dishes for a period of 15 min in a contaminated room is sufficient to infest the dishes completely. Furthermore, Conidia of *B. cinerea* that were placed in the center of the agar dish for 24 h, failed to develop visible colonies even after one week of incubation, suggesting that they were actively killed following the treatment of the invention.

### Example 2

### Destroying fungal colonies by air treated with an electrolyzed brine

A further experiment was carried out in order to illustrate that exposure of conidia of *Botrytis* to air treated by the electrolyzed brine according to the invention results in an essentially complete killing of said conidia.

The apparatus described in Figure 1 was operated in a cold storage room at a temperature of 9.68±0.35°C and relative humidity of 92.9±0.8 under the conditions described in Example 1. In the control storage room used for the purpose of comparison, the temperature was 9.66±0.19°C and the relative humidity was 96.1±1.9.

The following three sets of PDA plates were prepared:
Set 1: Conidia after germination - 10⁴ conidia were placed on a center of a PDA plate. The plates were incubated for 24 h at 25°C. Then, the plates were exposed to the air treated with the electrolyzed brine for specified periods of time as described below.
Set 2: Freshly harvested conidia of *Botrytis* were placed on PDA plates and were immediately subjected to the air treated with the electrolyzed brine for specified periods of time as described below.
Set 3: control PDA plates without conidia.

The plates (of all sets) were exposed to air treated by the electrolyzed brine in the cold storage room for the following periods of times: 0 (control), 1, 3, 6, 12, and 24 h. Subsequently, the plates were closed and transferred to the control room and after 24 h all the plates were incubated at 25°C for 4 days. The development of the colonies was documented by radial growth measurement and by photography. The experiment was carried out in 5 replications.

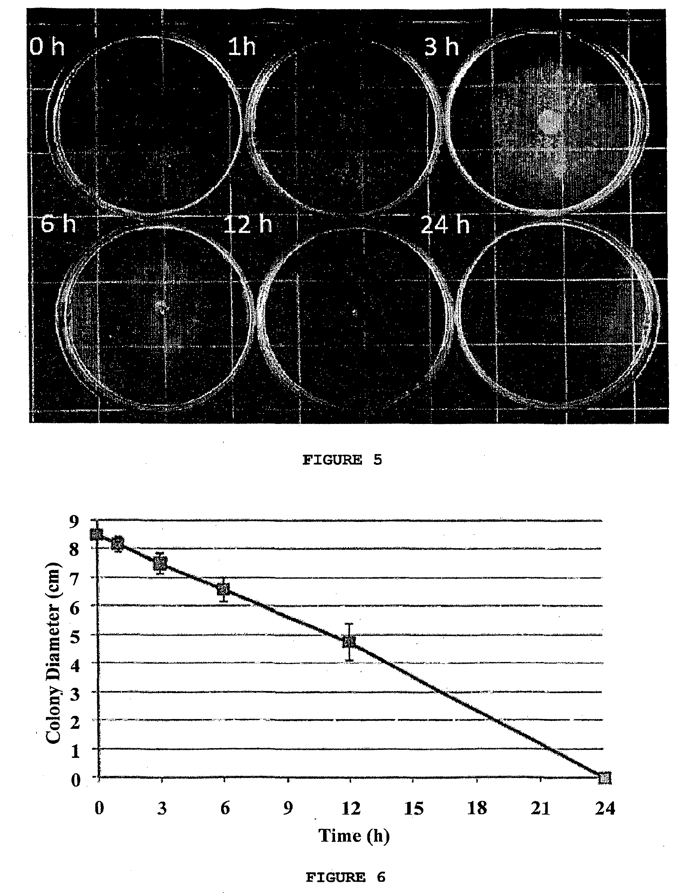

Regarding the second set, the results are illustrated in Figures 5 and 6. Figure 5 provides photos of the PDA plates (the photos were taken six days after the start of the experiment; the time of exposure (in hours) of each plate to the treated air prior to the incubation is indicated next to each plate). It is apparent that exposure of the conidia to the air treated with the electrolyzed brine for 24 h results in a complete killing of the conidia, as they failed to grow and develop a colony after 7 d of incubation at 25°C. The correlation between the duration of exposure of the PDA plates to the air treated with the electrolyzed brine, and the degree of colony developed in the PDA plate is illustrated by the graph shown in Figure 6, where the diameter of the colony formed in plotted against the duration of exposure of the plate to the treated air.

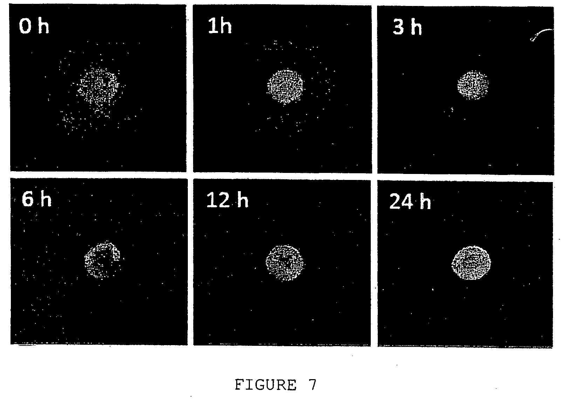

Regarding the first set, in which conidia were germinated on the PDA plates at 25°C for 24 h before being subjected to the treatment, the results are illustrated in Figure 7, where photos were taken three days after the exposure of the plates to the air treated with the electrolyzed brine. The efficacy of the 24 h duration exposure time is clearly apparent: no radial growth of the colony is observed, though hyphae developed on the spot of inoculation.

### Example 3

### Inhibition of decay in strawberries

The fruit (60 pannets of 400 gr each) was obtained directly from the farmer at the day of harvest. The fruit in half of the pannets was wounded by a metal rod to a depth of 2 mm. The pannets of the wounded fruit were left open during storage and the fruit was arranged in a monolayer. The fruit was then equally divided between the two cold storage rooms in cartons that contained 6 pannets each. Cartons were taken out from the cold storage rooms after 1, 2, 3, 6 and 10 days, and the fruits were checked individually. The level of decay was sorted for both *Rhizopus stolonifer* and *B. cinerea* and the combined results (in terms of percentage of infected fruits) is presented in Table 1. After 10 days of storage images of the decayed fruits were recorded and the amount of fruits containing visible external hyphae was recorded. These results are also summarized in Table 1.

**Table 1**

| Days in cold storage | Control/treatment | Without wounding | | With wounding | |
|---|---|---|---|---|---|
| | | Decay % | aerial hyphae | Decay % | aerial hyphae |
| 1 | Control | 0 | | 0 | |
| | Treatment | 0 | | 0 | |
| 2 | Control | 0 | | 0 | |
| | Treatment | 4.3±2.3 | | 1.3±2.6 | |
| 3 | Control | 6.5 | | 11.1 | |
| | Treatment | 2.5 | | 5.6 | |
| 6 | Control | 47.2±11.5 | | 22.2±15.8 | |
| | Treatment | 22.3±13.6 | | 33.2±24.0 | |
| 10 | Control | 100 | 16.5±4.0 | 100 | 50.0±41.1 |
| | Treatment | 68.8±14.0 | 0 | 82.9±20.4 | 0 |

In addition, some of the fruits were transferred for another 2 days at 20°C and room humidity of 80%.

**Table 2**

| Days in Storage/ temperature | | Control/treatment | Without wounding | With wounding |
|---|---|---|---|---|
| | | | Decay % | Decay % |
| 10°C | 20°C | | | |
| 1 | 2 | Control | 24.3±18.1 | 57.6±15.2 |
| | | Treatment | 18.4±8.2 | 37.3±8.2 |
| 3 | 2 | Control | 93.5±3.5 | 86.6±6.1 |
| | | Treatment | 55.9±3.7 | 67.1±15.2 |

The following conclusions may be drawn from the results reported above:
The unwounded fruit which were subjected to the air treated with the electrolyzed brine according to the present invention suffered less decay at most of the examination time points. After 10 days of storage the control suffered 100% decay as compared to 69% in the treated fruits. At this time point, control fruits suffered from the development aerial hyphae of *B. cinerea* while these symptoms were completely absent in the treated fruits. Thus, the treatment according to the invention inhibited completely the appearance of aerial hyphae on the fruit.

As indicated in Table 2, the fruit was also examined after cold storage combined with a subsequent storage period of 2 more days at 20°C. The decay observed in the fruit in the control room was consistently higher as compared to the treated room.

A further analysis (data not reported) indicates that the decay is not attributed to the artificial wounding, and was in fact developed from internal source in the fruit. Accordingly, the results related to the unwounded source represent more accurately the comparison between the treated and non-treated fruit.

### Example 4

### Inhibition of decay in grapes

The following experiments were carried out in order to investigate the effect of various regimes of treatments on the inhibition of decay in 'RedGlobe' grapes. 3 sets comprised of 6 boxes each, 5 Kg of RedGlobal grapes in each box were used.

The grapes were placed in the cold storage room at 10°C and the apparatus of Figure 1 was allowed to operate for 24 hours under the conditions set forth above (namely, the composition of the brine and all other working parameters remain unchanged). One set (total of 30 kg) was stored at 10°C without further treatment while another set was exposed once weekly to the air treated with the electrolyzed brine for a period of 24 hours.

After storage for 25 days at 10°C, a set of 3 replications from each treatment and from the grapes kept at the control room was evaluated for decay and quality.

The data is summarized in Table 3, where the second column indicates the number of decay grapes per 1 kg, as a result of botrytis; the third column indicates the number of decay grapes per 1 kg, as a result of botrytis & others infects; and the fourth column indicates the percentage of healthy grapes bunches (the standard deviation is also reported).

**Table 3**

| TREATMENT | Botrytis (no/kg) | Botrytis + others (no/kg) | Healthy bunches (%) |
|---|---|---|---|
| Periodical treatment | 0.00±0.00 | 2.17±2.31 | 75.00+33.07 |
| Single treatment | 0.25±0.25 | 2.05±1.08 | 74.17±10.10 |
| Control | 22.62±4.05 | 28.95±5.14 | 9.17±7.22 |

The major observation that can be made on the basis of the data collected is that either a single treatment, or successive treatments carried out periodically at intervals of a few days are capable of preventing grapes decay associated with the fungi Botrytis cinerea, without inflicting damage to the grapes. It is apparent that the control suffered heavy Botrytis decay while the single treatment practically abolished decay caused by Botrytis.

It is noted that the grapes were stored at 10°C for 25 d, which is more than 3 times for commercial storage at this temperature. Consequently, the grapes suffered from an average of about 2% decay caused by other fungi which usually do not develop and attack grapes stored at 0°C. The healthy bunches index shows very significant differences with respect to the control.

In view of the fact that storage time at 10°C is considered equivalent to at least twice the time at 0°C, the results reported in Table 3 above clearly suggest that a single treatment regime may effectively preserve grapes stored at 0°C for approximately two months, which period is more then what is required for marine transportation of grapes around the world.

### Example 5

### Inhibition of decay in potatoes, sweet potatoes and onions

The apparatus shown in Figure 1 was placed in a 25 m³ storage room (operating at a temperature of 14°C and relative humidity of 92%). A control storage room was maintained under identical conditions of temperature and humidity.

Potatoes (Nicola), sweet potatoes (Georgia Jet) and onions (Orlando) were placed in the treated storage room and in the control room. The total number of vegetables used in the experiment was equally divided between periods of 0, 24 48 and 96 hours exposure to air which was treated by the apparatus of the invention. To this end, three quarters of the total number of the vegetables were initially placed in the treated storage room and the remaining quarter in the control room. The apparatus was allowed to operate continuously in the treated storage room for a period of 96 hours, using about 15 liters of aqueous solution of sodium chloride having a concentration of about 30% by weight. The electrolytic cell operated with the following parameters: current- 4 Ampere, voltage - 3 volt. The air was introduced into the apparatus by a blower at a rate of 200 m³/hour. Following 24, 48 and 96 hours, one quarter of the total amount of vegetables was transferred from the treated storage room to the control room. At the end of the 96 hour period, all of the vegetables were subjected to conditions simulating shelve life at 20°C.

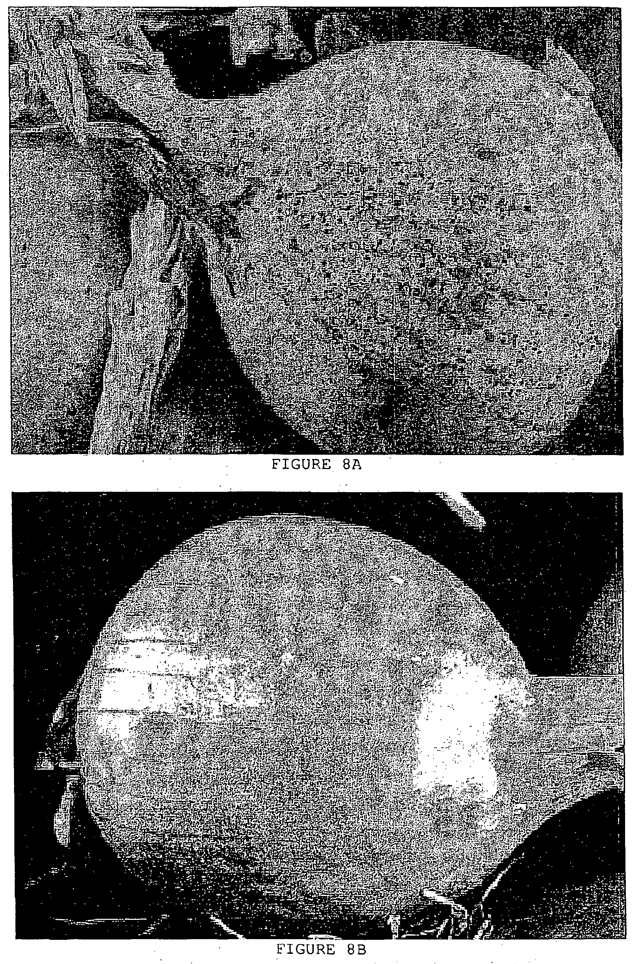

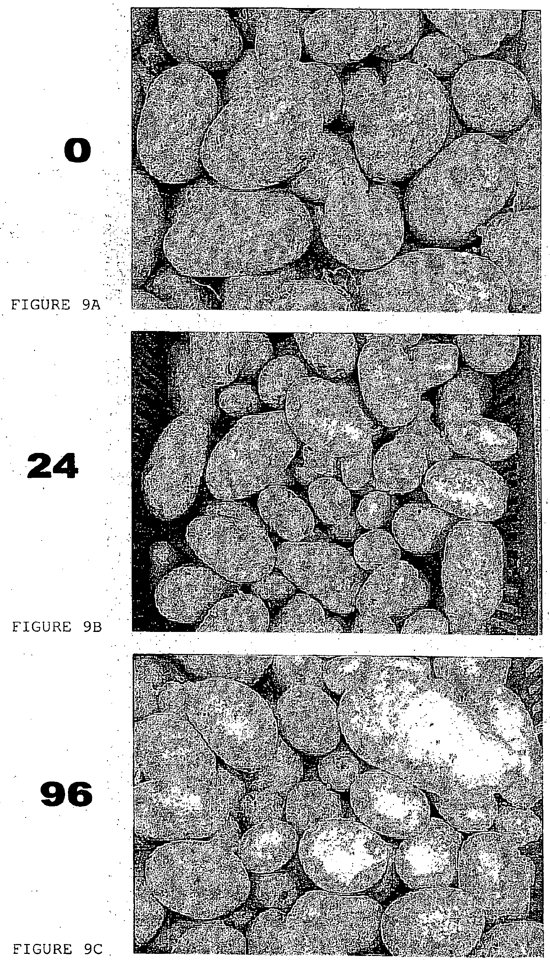

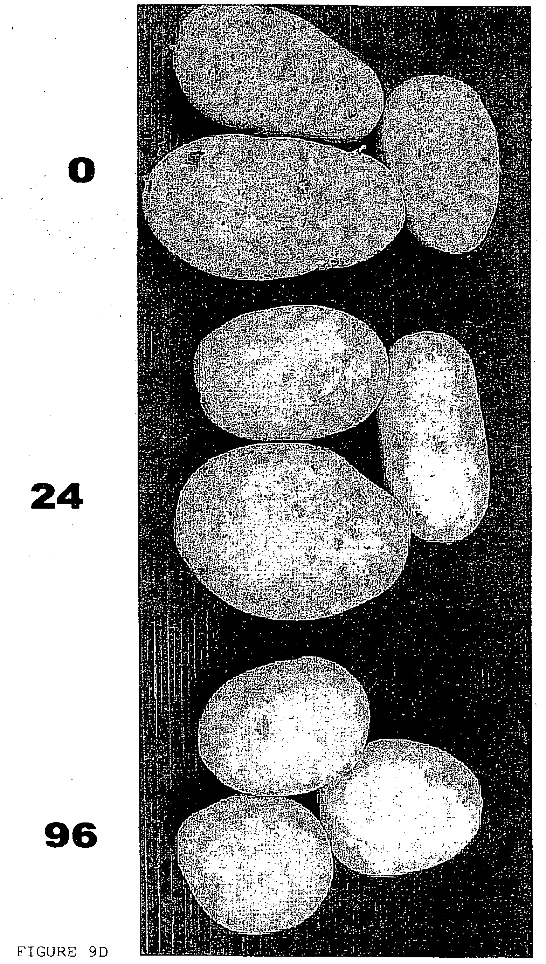

In general, no phytotoxic damage was observed in the vegetables during the treatment period. More specifically, upon comparing the non-treated group to the groups exposed to 24, 48 and 96 hours of air treated with the apparatus of the invention, the following was noted:
Sweet potatoes: the color of the skin improved, and the overall appearance of the sweet potatoes became more esthetic.
Onions: the onions appeared more shiny because of the reduction in fungal infection of the skin. Figures 8a and 8b show non-treated and treated onions, respectively.
Potatoes: the skin color became lighter and a reduction of approximately 20 and 70% of the amount of the fungus Rhizoctonia solani in the skin of the potatoes was seen after 24 and 96 hours of exposure to the treated air, respectively. Figure 9a shows the non-treated potatoes whereas Figures 9b and 9c show potatoes which were treated for 24 and 96 hours, respectively. Figure 9d allows an easy comparison between the potatoes.

### Example 6

### Inhibition of decay in lemons and red grapefruits

The apparatus shown in Figure 1 was placed in a large cooled storage room having a volume of approximately 1000 cubic meters and operating at a temperature of about 7°C and relative humidity of above 90%. A control storage room was maintained under identical conditions of temperature and humidity. The fruits stored in the rooms were lemons and red grapefruits. The apparatus was allowed to operate continuously in the treated storage room for a period of 96 hours, using about 15-20 liters of aqueous solution of sodium chloride having a concentration of about 30% by weight. The electrolytic cell operated with the following parameters: current- 18 Ampere, voltage - 7 volt. The air was introduced into the apparatus by a blower at a rate of about 200 m³/hour. During the treatment period, the Redox potential of the brine was about 900 mV.

The treatment regime during the four days was as follows: on the first day, at the beginning of the experiment, the chlorine level was allowed to reach 2-3 ppm for a period of two-three hours. Subsequently, the apparatus was operated such that the average chlorine level was about 0.3 ppm. However, this routine mode of operation was interrupted twice a day, each time generating an average chlorine level of about 1-1.5 ppm for a period of about one hour.

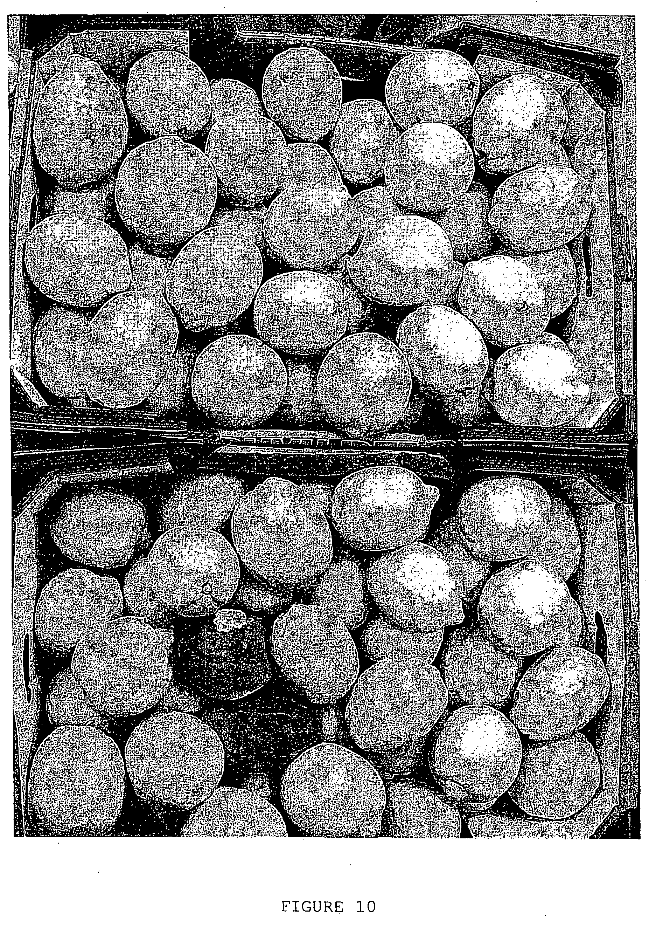

Seven days after the beginning of the experiment, a decay process was observed in the control room, while the fruit in the treated room was intact (see the photographs shown in Figure 10 for illustration). Two months later, the ratio between the numbers of decayed fruits in the two rooms was about 1:50 (during the two months period, the apparatus was operated occasionally, once in a few days for several hours, with the average chlorine level being about 0.3 ppm).

Notably, for decayed lemons and grapefruits, which were placed in the treated room and were exposed to the air treated according to the invention, a significant reduction in fungal infection of the skin was observed.

### Example 7

### Inhibition of decay in mangos

Mangos are attacked after harvest by various pathogens (e.g., *Alternatia alternate*) and approximately 7% of the total quantity of fruit is damaged and cannot be marketed. The following experiment was carried out in order to demonstrate the efficacy of the method of the invention as a suitable postharvest treatment for mangos.

Eleven pallets carrying about 7,000 kg of mangos (Shelly) were placed in a cooled storage room operating at 8°C. A week later, the apparatus shown in Figure 1 was placed in the cooled room and was allowed to operate continuously for 18 hours under the conditions set forth in previous examples.

15-20 days later, when the fruit was packaged in order to be delivered to the market, it was found that the level of decay in the fruit (mostly caused by *Alternaria alternate*) was about 3.5%. It should be noted that this significant reduction in the level of expected decay in the fruit was achieved despite the fact that the postharvest treatment had been initiated about a week after the harvest.

In another experiment, 6000 kg of the fruit were placed in the cold storage room, but this time the apparatus was operated at the start of the storage period. No damage due to *Alternatia alternate* was observed when the fruit was transported to the market about two weeks later.

## Claims

1. A method for prolonging the shelf life of agricultural and food products, comprising forcing a stream of air to flow upwardly through a treatment zone, such that it comes into contact with a stream of an aqueous salt solution having Redox potential of not less than 200 mV on a substantially horizontally aligned perforated surface, thereby forming a layer of bubbling liquid located above said surface, and delivering the treated air which exits said treatment zone into a storage room in which said agricultural or food products are placed.

2. A method according to claim 1, wherein the Redox potential of the aqueous salt solution is not less than 450 mV.

3. A method according to any one of the preceding claims, wherein the agricultural and food products placed in the storage room comprise fruit or vegetables.

4. A method for prolonging the postharvest life of fruit and vegetables according to claim 3, wherein the fruit and vegetables are selected from the group consisting of grapes, strawberries, tomatoes, potatoes, sweet potatoes, onions, blueberries, peaches, mangoes, melons, eggplants, apples, apricots, cherries, avocadoes, peppers and citrus fruit.

5. A method according to claim 4, wherein the fruit and vegetables are selected from the group consisting of grapes, strawberries, potatoes, sweet potatoes, onions, citrus fruits and mangos.

6. A method according to any one of claims 3 to 5, wherein the storage room is a cold storage room.

7. A method according to claim 6, wherein the temperature at the storage room is in the range between -1°C and 14 °C.

8. A method according to any one of claims 3 to 7, wherein the aqueous salt solution is an electrolyzed solution.

9. A method according to claim 8, wherein the concentration of the salt dissolved in the electrolyzed solution is not less than 10% (w/w).

10. A method according to claim 8 or 9, wherein the aqueous solution contains one or more water soluble salts represented by the formulas MX, M₂X and MX₂, wherein X is selected from the group consisting of chloride, bromide, iodide, sulfate and nitrate anions, and M indicates a metal cation selected from the group consisting of lithium, sodium, potassium, calcium, magnesium and zinc.

11. A method according to claim 10, wherein the salt is sodium chloride.

12. A method according to any one of the preceding claims, comprising periodically or continuously measuring the Redox potential of the salt solution, and electrolytically, mechanically or chemically adjusting the Redox potential of the solution based on the measured value of the Redox potential.

13. A method according to any one of the preceding claims, comprising periodically or continuously measuring the level of chlorine-containing compounds in the storage room, and electrolytically, mechanically or chemically adjusting said level of chlorine-containing compounds based on the measured value.

## Patentansprüche

1. Ein Verfahren zur Verlängerung der Haltbarkeit von Agrar- und Lebensmittelprodukten, umfassend Forcieren eines Luftstroms aufwärts durch eine Behandlungszone zu fließen, derart dass er mit einem Strom aus einer wässrigen Salzlösung mit einem Redoxpotential von nicht weniger als 200 mV auf einer im Wesentlichen horizontal ausgerichteten perforierten Oberfläche in Kontakt kommt, wobei eine Schicht aus sprudelnder Flüssigkeit, die sich oberhalb der Oberfläche befindet, gebildet wird und Befördern der behandelten Luft, die die Behandlungszone verlässt, in einen Lagerraum, in dem sich die Agrar- oder Lebensmittelprodukte befinden.

2. Ein Verfahren nach Anspruch 1, wobei das Redoxpotential der wässrigen Salzlösung nicht weniger als 450 mV beträgt.

3. Ein Verfahren nach einem der vorhergehenden Ansprüche, wobei die Agrar- und Lebensmittelprodukte, die sich in dem Lagerraum befinden, Obst oder Gemüse umfassen.

4. Ein Verfahren zur Verlängerung der Lebenszeit von Obst und Gemüse nach der Ernte nach Anspruch 3, wobei das Obst und Gemüse aus der Gruppe bestehend aus Trauben, Erdbeeren, Tomaten, Kartoffeln, Süßkartoffeln, Zwiebeln, Blaubeeren, Pfirsichen, Mangos, Melonen, Auberginen, Äpfeln, Aprikosen, Kirschen, Avocados, Paprikaschoten und Zitrusfrüchten ausgewählt ist.

5. Ein Verfahren nach Anspruch 4, wobei das Obst und Gemüse aus der Gruppe bestehend aus Trauben, Erdbeeren, Kartoffeln, Süßkartoffeln, Zwiebeln, Zitrusfrüchten und Mangos ausgewählt ist.

6. Ein Verfahren nach einem der Ansprüche 3 bis 5, wobei der Lagerraum ein kalter Lagerraum ist.

7. Ein Verfahren nach Anspruch 6, wobei die Temperatur im Lagerraum im Bereich zwischen -1°C und 14°C liegt.

8. Ein Verfahren nach einem der Ansprüche 3 bis 7, wobei die wässrige Salzlösung eine elektrolysierte Lösung ist.

9. Ein Verfahren nach Anspruch 8, wobei die Konzentration des in der elektrolysierten Lösung gelösten Salzes nicht weniger als 10% (Gew./Gew.) beträgt.

10. Ein Verfahren nach Anspruch 8 oder 9, wobei die wässrige Lösung ein oder mehrere wasserlösliche(s) Salz(e), dargestellt durch die Formeln MX, M₂X und MX₂, enthält, wobei X aus der Gruppe bestehend aus Chlorid-, Bromid-, Iodid-, Sulfat- und Nitratanionen ausgewählt ist und M ein Metallkation, ausgewählt aus der Gruppe bestehend aus Lithium, Natrium, Kalium, Calcium, Magnesium und Zink, angibt.

11. Ein Verfahren nach Anspruch 10, wobei das Salz Natriumchlorid ist.

12. Ein Verfahren nach einem der vorhergehenden Ansprüche, umfassend periodisches oder kontinuierliches Messen des Redoxpotentials der Salzlösung und elektrolytisches, mechanisches oder chemisches Einstellen des Redoxpotentials der Lösung, basierend auf dem gemessenen Wert des Redoxpotentials.

13. Ein Verfahren nach einem der vorhergehenden Ansprüche, umfassend periodisches oder kontinuierliches Messen des Levels an Chlor enthaltenden Verbindungen im Lagerraum und elektrolytisches, mechanisches oder chemisches Einstellen des Levels an Chlor enthaltenden Verbindungen, basierend auf dem gemessenen Wert.

## Revendications

1. Procédé pour prolonger la durée de conservation de produits agricoles et alimentaires, comprenant la circulation ascendante forcée d'un courant d'air dans une zone de traitement, de façon à ce qu'il vienne au contact d'un flux d'une solution de sel aqueuse ayant un potentiel d'oxydoréduction qui n'est pas inférieur à 200 mV sur une surface perforée essentiellement alignée à l'horizontale, pour former ainsi une couche d'une liquide bouillonnante située au-dessus de ladite surface, et la délivrance de l'air traité qui sort de ladite zone de traitement dans une salle d'entreposage dans laquelle lesdits produits agricoles ou alimentaires sont placés.

2. Procédé selon la revendication 1, dans lequel le potentiel d'oxydoréduction de la solution de sel aqueuse n'est pas inférieur à 450 mV.

3. Procédé selon l'une quelconque des revendications précédentes, dans lequel les produits agricoles et alimentaires placés dans la salle d'entreposage comprennent des fruits ou des légumes.

4. Procédé pour prolonger la durée de conservation après cueillette des fruits et des légumes selon la revendication 3, dans lequel les fruits et les légumes sont choisis dans le groupe constitué par le raisin, les fraises, les tomates, les pommes de terre, les patates douces, les oignons, les myrtilles, les pêches, les mangues, les melons, les aubergines, les pommes, les abricots, les cerises, les avocats, les poivrons et les agrumes.

5. Procédé selon la revendication 4, dans lequel les fruits et les légumes sont choisis dans le groupe constitué par le raisin, les fraises, les pommes de terre, les patates douces, les oignons, les agrumes et les mangues.

6. Procédé selon l'une quelconque des revendications 3 à 5, dans lequel la salle d'entreposage est une salle d'entreposage froide.

7. Procédé selon la revendication 6, dans lequel la température dans la salle d'entreposage est dans une plage entre -1 °C et 14 °C.

8. Procédé selon l'une quelconque des revendications 3 à 7, dans lequel la solution de sel aqueuse est une solution électrolysée.

9. Procédé selon la revendication 8, dans lequel la concentration du sel dissous dans la solution électrolysée n'est pas inférieure à 10 % (p/p).

10. Procédé selon la revendication 8 ou 9, dans lequel la solution aqueuse contient un ou plusieurs sels solubles dans l'eau représentés par les formules MX, M₂X et MX₂, dans lesquelles X est choisi dans le groupe constitué par les anions chlorure, bromure, iodure, sulfate et nitrate, et M indique un cation métallique choisi dans le groupe constitué par le lithium, le sodium, le potassium, le calcium, le magnésium et le zinc.

11. Procédé selon la revendication 10, dans lequel le sel est le chlorure de sodium.

12. Procédé selon l'une quelconque des revendications précédentes, comprenant la mesure périodique ou continue du potentiel d'oxydoréduction de la solution de sel, et l'ajustement électrolytique, mécanique ou chimique du potentiel d'oxydoréduction de la solution sur la base de la valeur de potentiel d'oxydoréduction mesurée.

13. Procédé selon l'une quelconque des revendications précédentes, comprenant la mesure périodique ou continue du niveau des composés contenant du chlore dans la salle d'entreposage, et l'ajustement électrolytique, mécanique ou chimique dudit niveau des composés contenant du chlore sur la base de la valeur mesurée.
